# EUROPEAN PATENT SPECIFICATION

(11) **EP 1 947 416 B1**
(45) Date of publication and mention of the grant of the patent: **07.02.2018**
(21) Application number: 08000902.0
(22) Date of filing: 18.01.2008
(51) Int. Cl.: G01B 7/06, G01B 13/06

(54) **Apparatus and process for measuring the thickness of electrically non conductive and non ferromagnetic materials in the form of films, webs and the like**
Vorrichtung und Verfahren zur Messung nicht elektrisch leitender und nicht ferromagnetischer Materialien in Form von Folien, Netzen oder Ähnlichem
Appareil et processus de mesure de l'épaisseur de matériaux électriquement non conducteurs et non ferromagnétiques en forme de films, toiles et similaires

(30) Priority: 18.01.2007 IT MI20070063
(43) Date of publication of application: 23.07.2008
(73) Proprietor: ELECTRONIC SYSTEMS S.P.A., 28015 Momo (NO) (IT)
(72) Inventor: Masotti, Alessandro, 21013 Gallarate (VA) (IT); Trizzino, Stefano, 92010 Bivona (AG) (IT); Martena, Florinda, 28019 Suno (NO) (IT)
(74) Representative: Premru, Rok

(56) References cited:
- EP-B1- 0 811 826
- GB-A- 1 228 274
- GB-A- 2 156 526
- JP-A- H0 973 677
- US-A- 5 355 083
- US-A- 5 886 521
- US-A1- 2003 090 266

## Description

There is disclosed herein an apparatus for measuring the thickness of electrically non-conductive, non-ferromagnetic materials in the form of films or webs, which can perform on-line calibration (i.e. when the film or web material manufacturing plant is in operation) of its measuring devices.

There is further disclosed herein a process for measuring the thickness of electrically non-conductive and non-ferromagnetic materials in the form films or webs. The apparatus and process as disclosed below are particularly intended for use in plants for production of electrically non-conductive and non-ferromagnetic materials in the form of films or webs, for controlling and adjusting the dimensional characteristics of the materials so produced.

Particularly, the present apparatus and process are intended for use in plants for production of rubber webs, paper webs and polyolefin films.

The thickness of an electrically non-conductive, non-ferromagnetic web or film material may be measured by placing the material to be measured in contact with a reference metal surface.

The distance of the side of the film or web material lying on the reference metal surface (bottom side) may be measured using an inductive measuring device.

The distance of the top side of the film or web material (i.e. the side opposite the one lying on the reference metal surface) may be measured using an optical or pneumatic distance measuring device.

The thickness measurement is thus obtained as a difference between the two faces of the film material.

Patent EP 0 811 826 B1, by the applicant hereof, discloses an apparatus for measuring the thickness of an electrically non-conductive film or web material, which is fed on a reference metal roll, comprising a fluidic backscattering sensor and an inductive sensor which operate in two coaxial regions, so that their measurements relate to a common axis orthogonal to the axis of the reference metal roll.

US 5,355,083, by Measurex Corporation, discloses an apparatus for measuring the thickness of an electrically non-conductive film material, which is fed on a reference metal roll, comprising an inductive device and a laser device which operate in two coaxial regions, so that their measurements relate to a common reference axis.

Each device for non-contact measurement of the thickness of an electrically non-conductive film material obviously requires periodic calibration.

EP 0 811 826 B1 suggests to perform calibration of the inductive sensor and the fluidic sensor by using, as a reference, the surface of the metal roll that is used as a support for the film material.

US 5,355,083 suggests to perform calibration of both (laser and inductive) measuring devices by using, as a reference, the surface of the metal roll that is used as a support for the film material.

Thence, the measuring apparatus can be only calibrated when the film material production plant is stopped (off-line condition), because this is the only condition in which the roll has no material thereon.

It shall be further noted that, in operation, thickness gages are exposed to noise, particular thermal drift, which can lead to intolerable measuring errors.

In this case, the resulting film or web material will have unacceptable dimensional tolerances and will have to be discarded.

When optical measuring devices are used, further measuring errors may be also caused by the presence of fumes in the film or web material production environment.

The purpose of the present invention is to provide a solution to prior art problems and particularly to the above mentioned problems.

This purpose is achieved by an apparatus as defined in claim 1 and a process as defined in claim 10.

Further advantages can be achieved by the additional features of the dependent claims.

Certain possible embodiments of the apparatus and process proposed by the present inventors will be described hereinbelow with reference to the annexed figures, in which:
- Fig. 1 is a perspective view that schematically shows an apparatus for contactless measurement of the thickness of electrically non-conductive and non-ferromagnetic materials in the form of films or webs, which comprises a device for calibrating the sensors of the apparatus;
- Fig. 2 is a sectional view of a detail of the apparatus for contactless measurement of the thickness of electrically non-conductive and non-ferromagnetic film materials as shown in Fig. 1;
- Fig. 3 shows the apparatus of Fig. 1 during normal operation;
- Fig. 4 shows the apparatus of Fig. 1 during operation of the calibration device.

Referring to the annexed drawings, numeral 1 designates an apparatus for measuring the thickness of an electrically non-conductive, non-ferromagnetic film or web material 2, comprising a roll 3 and a measuring head 4, the latter cooperating with the roll 3 to define a gap 5 for the passage of an electrically non-conductive, non-ferromagnetic film or web material 2.

The roll 3 has a metal surface 31, such as an aluminum surface.

The film or web material 2 that runs through the gap 5 has a top surface 21 facing towards the measuring head 4 and spaced therefrom, and a bottom surface 22 in contact with the metal surface 31.

The measuring head 4 comprises a first measuring device 41 and a second measuring device 42, which are integrally formed and operate in two coaxial regions in space, so that their measurements relate to a common measuring axis X.

The first measuring device 41 is an inductive device adapted to measure the distance of a measuring point X1 on the axis X, at the metal surface 31 of the roll 3 on which the electrically non-conductive, non-ferromagnetic web or film material 2 runs.

The second measuring device 42 is adapted to measure the distance of a measuring point X2 on the axis X, on the top surface 21 of the web or film material 2, i.e. at the side facing towards the measuring device 4.

In the illustrated embodiment, the second measuring device 42 is a fluidic backscattering sensor, although it can alternatively be an optical device.

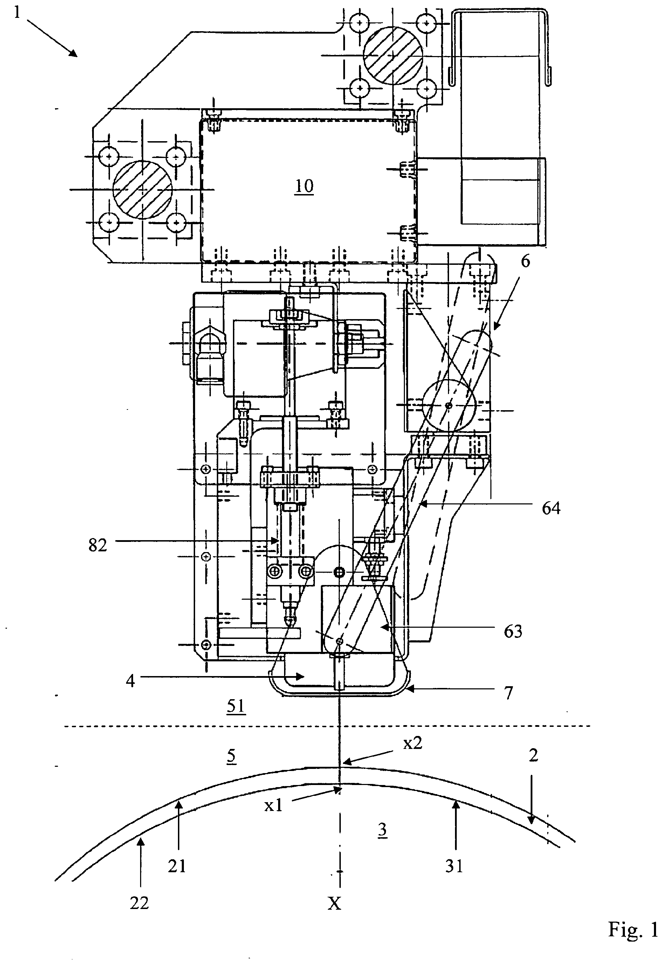

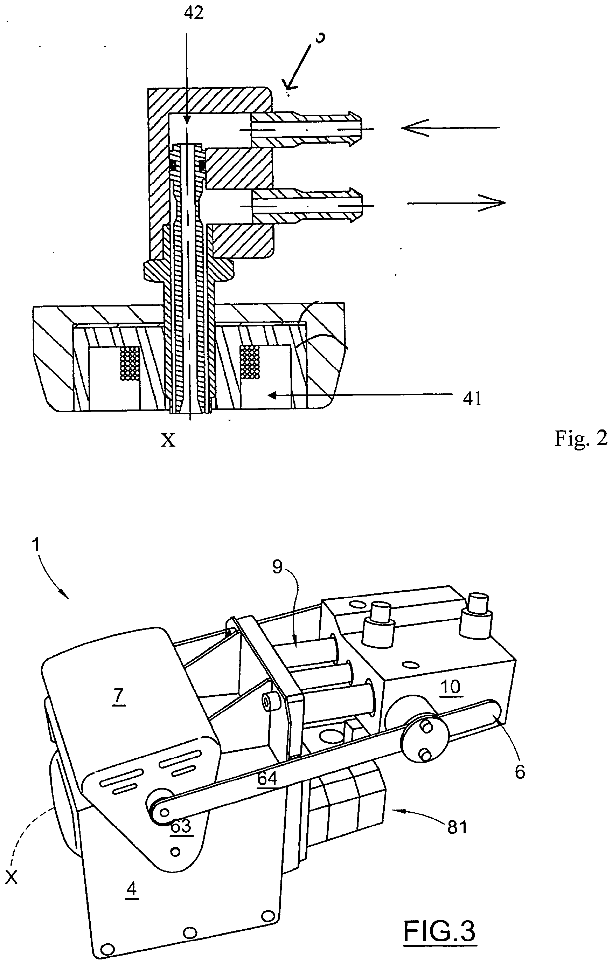

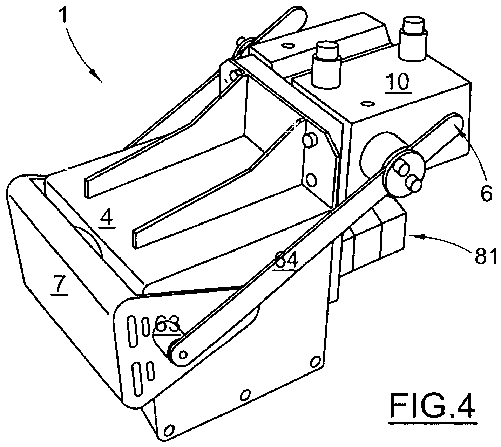

The apparatus 1 comprises a device 6, 63, 64 for driving a metal screen 7 between a first angular position (see Figs. 1 and 4), in which the screen 7 is interposed between the measuring head 4 and the roller 3 and prevents measurement of the thickness of the film material 2 running on the roll 3, and a second angular position (see Fig. 3), in which the screen 7 is in a remote position, and allows the measuring head 4 to measure the thickness of the film material 2 running on the roll 3.

Means 81, 82 are further provided for adjusting the mutual distance - along the measuring axis X - between the measuring head 4 and the metal screen 7 when the latter is in its first angular position.

The metal screen 7 is made of the same material as the surface 31 of the roll 3.

The thickness measuring apparatus 1 may be calibrated onboard and in on-line condition by carrying out the steps of:
- interposing the metal screen 7, formed of the same material as the metal surface 31 of the roll 3, between the measuring head 4 and the roll 3;
- changing the distance between the measuring head 4 and the metal screen 7 in a stepwise manner, within a preset range of predetermined distances;
- detecting a value, at each predetermined distance, as measured by the inductive measuring device 41 and/or by the optical or pneumatic measuring device 42;
- determining the calibration curve of the optical or pneumatic measuring device 42 and/or the inductive measuring device 41.

The apparatus and process so described allow calibration of the first and second measuring means 41, 42 directly onboard, even during operation of the plant for production of the film material 2 (on-line condition).

Preferably, the apparatus 1 has means 9, 10 for moving the measuring head 4 away from the roll 3 to reversibly form an additional gap 51 designed to receive the metal screen 7, thereby preventing any risk of interference between the screen 7 and the film material 2 and the roll 3.

In the illustrated embodiment, the device 63, 64 for driving the metal screen 7 and the means 9, 10 for reversibly moving the measuring head 4 away from the roll 3 are operated by a common drive means 10.

Preferably, the drive means 10 is a linear actuator, such as a pneumatic actuator, having a stem 9 joined to the head 4.

The device 63, 64 for driving the metal screen 7 comprises a slider-crank mechanism 64, 63, in which the crank 63 is hinged to the measuring head 4 and controls rotation of the metal screen 7.

The connecting rod 64 is hinged to the body of the actuator 10.

Preferably, the means 81, 82 for adjusting the distance between the metal screen 7 and the measuring head 4 along the measuring axis X operate on the measuring head 4.

The means 81, 82 for adjusting the distance between the metal screen 7 and the measuring head 4 may include a stepper motor 81 and an absolute position transducer, such as a LVDT transducer.

Otherwise, an incremental position transducer may be also used.

## Claims

1. An apparatus (1) for measuring the thickness of an electrically non-conductive, non-ferromagnetic film or web material (2), comprising:
- a roll (3) having a metal surface (31);
- a measuring head (4) that defines, in combination with said roll (3), a gap for the passage of the electrically non-conductive and non-ferromagnetic film or web material (2), having a top surface (21) facing towards said measuring head (4) and spaced therefrom, and a bottom surface (22) in contact with said metal surface (31), said measuring head (4) having a first measuring device (41) and a second measuring device (42) which operate in two coaxial regions in space, so that measurements thereof relate to a common measurement axis (X), said first measuring device (41) being an inductive measuring device (41), adapted to measure the distance of a measuring point (x1) on said metal surface (31) of said roll (3) as the electrically non-conductive, non-ferromagnetic film or web material (2) is fed in said gap (5), said second device (42) being adapted to measure the distance of a measuring point (x2) on the top surface (21) of the film or web material (2) which passes through said gap (5), said first and second measuring devices (41, 42) being integrally formed,
**characterized in that** the apparatus (1) further comprises a device (6, 63, 64) for driving a metal screen (7) of the apparatus (1) between a first position, in which said screen (7) is interposed between said measuring head (4) and said roll (3) and a second position, in which said screen (7) is not interposed between said measuring head (4) and said roll (3), and **in that** the apparatus (1) further comprises means (81, 82) for adjusting the distance between said metal screen (7) and said measuring head (4) along said measurement axis (X), wherein said metal screen (7) is formed of the same metal material as said metal surface (31) of said roll (3).

2. An apparatus (1) as claimed in claim 1, wherein means (9, 10) are provided for moving said measuring head (4) away from said roll (3), for reversibly forming an additional gap (51) designed to receive said metal screen (7).

3. An apparatus (1) as claimed in claim 2, wherein said device (6, 63, 64) for driving said metal screen (7) and said means (9, 10) for reversibly moving said measuring head (4) away from said roll (3) are operated by a common drive means (10).

4. An apparatus as claimed in claim 3, wherein said drive means (10) is a linear actuator (10) and wherein said device (6, 63, 64) for driving said metal screen (7) comprises a slider-crank mechanism (63, 64).

5. An apparatus (1) as claimed in any one of the preceding claims, wherein said means (81, 82) for adjusting the distance between said metal screen (7) and said measuring head (4) along said measuring axis (X) operate on said measuring head (4).

6. An apparatus (1) as claimed in claim 5, wherein said means (8) for adjusting the distance between said metal screen (7) and said measuring head (4) include a stepper motor (81).

7. An apparatus (1) as claimed in claim 5 or 6, wherein said means (8) for adjusting the distance between said metal screen (7) and said measuring head (4) include an incremental position transducer (81).

8. An apparatus (1) as claimed in claim 5 or 6, wherein said means (8) for adjusting the distance between said metal screen (7) and said measuring head (4) include an absolute position transducer (81).

9. An apparatus (1) as claimed in any one of the preceding claims, wherein said second measuring device (42) is a fluidic backscattering sensor.

10. A process for onboard, on-line calibration of an apparatus (1) for contactless measurement of the thickness of an electrically non-conductive, non-ferromagnetic web or film material (2) which runs on a roll (3) with a metal surface (31), wherein on-line calibration defines a calibration when the film or web material manufacturing plant is in operation, said apparatus having a measuring head (4) which comprises an inductive measuring device (41) and/or an optical or pneumatic measuring device (42), said process comprising the steps of:
- interposing a metal screen (7), formed of the same material as the metal surface (31) of the roll (3), between the measuring head (4) and the roll (3);
- changing the distance between said measuring head (4) and said metal screen (7) in a stepwise manner, within a preset range of predetermined distances;
- detecting a value, at each predetermined distance, as measured by the inductive measuring device (41) and/or by the optical or pneumatic measuring device (42);
- determining the calibration curve of the optical or pneumatic measuring device (42) and/or the inductive measuring device (41).

## Patentansprüche

1. Vorrichtung (1) zur Messung der Dicke eines elektrisch nicht leitenden und nicht ferromagnetischen Folien- oder Bahnmaterials (2), umfassend:
- eine Walze (3) mit einer Metalloberfläche (31) ;
- einen Messkopf (4), der in Kombination mit der Walze (3) einen Spalt für den Durchtritt des elektrisch nicht leitenden und nicht ferromagnetischen Folien- oder Bahnmaterials (2) definiert, welches mit einer dem Messkopf (4) zugewandten und von diesem beabstandeten Oberseite (21) und einer mit der Metalloberfläche (31) in Kontakt stehenden Unterseite (22) versehen ist, wobei der Messkopf (4) eine erste Messeinrichtung (41) und eine zweite Messeinrichtung (42) aufweist, die in zwei koaxialen Bereichen im Raum arbeiten, so dass sich ihre Messungen auf eine gemeinsame Messachse (X) beziehen, wobei die erste Messeinrichtung (41) eine induktive Messeinrichtung (41) ist, die dazu eingerichtet ist, den Abstand eines Messpunktes (x1) auf der Metalloberfläche (31) der Walze (3) während der Vorschubbewegung des elektrisch nicht leitfähigen und nicht ferromagnetischen Folien- oder Bahnmaterials (2) in diesen Spalt (5) zu messen, die zweite Einrichtung (42) dazu eingerichtet ist, den Abstand eines Messpunktes (x2) auf der Oberseite (21) des durch den Spalt (5) hindurchtretenden und elektrisch nicht leitfähigen sowie nicht ferromagnetischen Folien- oder Bahnmaterials (2) zu messen, wobei die erste und die zweite Messeinrichtung (41, 42) einstückig ausgebildet sind,
**dadurch gekennzeichnet, dass**
die Vorrichtung (1) weiter eine Einrichtung (6, 63, 64) umfasst, die zum Bewegen einer Metallblende (7) der Vorrichtung (1) zwischen einer ersten Position, in der die Blende (7) zwischen dem Messkopf (4) und der Walze (3) angeordnet ist, und einer zweiten Position, in der die Blende (7) nicht zwischen dem Messkopf (4) und der Walze (3) angeordnet ist,
und dass die Vorrichtung (1) weitere Mittel (81, 82) umfasst, die zur Einstellung des Abstandes zwischen der Metallblende (7) und dem Messkopf (4) entlang der Messachse (X) vorgesehen sind, wobei die Metallblende (7) aus demselben metallischen Werkstoff wie die Metalloberfläche (31) der Walze (3) gefertigt ist.

2. Vorrichtung (1) nach Anspruch 1, wobei Mittel (9, 10) zum Wegbewegen des Messkopfes (4) von der Walze (3) vorgesehen sind, zur reversiblen Ausbildung eines zur Aufnahme der Metallblende (7) ausgebildeten Zusatzspalts (51).

3. Vorrichtung (1) nach Anspruch 2, wobei die Einrichtung (6, 63, 64) zum Bewegen der Metallblende (7) und die Mittel (9, 10) zum reversiblen Wegbewegen des Messkopfes (4) von der Walze (3) mit einem gemeinsamen Antriebsmittel (10) betrieben werden.

4. Vorrichtung nach Anspruch 3, wobei das Antriebsmittel (10) ein Linearaktuator (10) ist und die Einrichtung (6, 63, 64) zum Bewegen der Metallblende (7) ein Schubkurbelgetriebe (63, 64) umfasst.

5. Vorrichtung (1) nach einem der vorhergehenden Ansprüche, wobei die Mittel (81, 82) zur Einstellung des Abstandes zwischen der Metallblende (7) und dem Messkopf (4) entlang der Messachse (X) auf den Messkopf (4) einwirken.

6. Vorrichtung (1) nach Anspruch 5, wobei die Mittel (8) zur Einstellung des Abstandes zwischen der Metallblende (7) und dem Messkopf (4) einen Schrittmotor (81) umfassen.

7. Vorrichtung (1) nach Anspruch 5 oder 6, wobei die Mittel (8) zur Einstellung des Abstandes zwischen der Metallblende (7) und dem Messkopf (4) einen Inkrementalpositionsgeber (81) umfassen.

8. Vorrichtung (1) nach Anspruch 5 oder 6, wobei die Mittel (8) zur Einstellung des Abstandes zwischen der Metallblende (7) und dem Messkopf (4) einen Absolutpositionsgeber (81) umfassen.

9. Vorrichtung (1) nach einem der vorhergehenden Ansprüche, wobei die zweite Messvorrichtung (42) ein fluidischer Rückstreuungssensor ist.

10. Verfahren zur on-line an Bord-Kalibrierung einer Vorrichtung (1) zur kontaktlosen Messung der Dicke eines elektrisch nicht leitenden und nicht ferromagnetischen Folien- oder Bahnmaterials (2), das auf eine Rolle (3) mit einer Metalloberfläche (31) läuft, wobei die on-line Kalibrierung beim Betrieb der Folien- oder Bahnmaterial-Fertigungsanlage eine Kalibrierung definiert und die Vorrichtung einen Messkopf (4) aufweist, der eine induktive Messeinrichtung (41) und/oder eine optische oder pneumatische Messeinrichtung (42) umfasst, mit den Schritten:
- Zwischenlegen einer aus dem gleichen Material wie die Metallfläche (31) der Walze (3) gebildeten Metallblende (7) zwischen dem Messkopf (4) und der Walze (3);
- stufenweise Verändern des Abstands zwischen dem Messkopf (4) und der Metallblende (7) innerhalb eines voreingestellten Bereichs vorbestimmter Abstände;
- Erfassen eines von der induktiven Messeinrichtung (41) und/oder von der optischen oder pneumatischen Messeinrichtung (42) gemessenen Wertes in jedem vorbestimmten Abstand,
- Bestimmen der Kalibrierungskurve der optischen oder pneumatischen Messeinrichtung (42) und/oder der induktiven Messeinrichtung (41).

## Revendications

1. Un appareil (1) pour mesurer l'épaisseur d'un matériau en film ou en bande non ferromagnétique et non électroconducteur (2), comprenant :
- un rouleau (3) possédant une surface métallique (31) ;
- une tête de mesure (4) définissant, en combinaison avec ledit rouleau (3), un espace pour le passage du matériau en film ou en bande non ferromagnétique et non électroconducteur (2), possédant une surface supérieure (21), faisant face vers ladite tête de mesure (4) et étant espacée de celle-ci, et une surface inférieure (22) en contact avec ladite surface métallique (31), ladite tête de mesure (4) possédant un premier dispositif de mesure (41) et un second dispositif de mesure (42) agissant dans deux régions coaxiales dans l'espace, de manière que leurs mesures se rapportent à un axe de mesure commun (X), ledit premier dispositif de mesure (41) étant un dispositif de mesure inductif (41), apte à mesurer la distance d'un point de mesure (x1) sur ladite surface métallique (31) dudit rouleau (3), au fur et à mesure que le matériau en film ou en bande non ferromagnétique et non l'électroconducteur (2) avance dans ledit espace (5), ledit second dispositif (42) étant apte à mesurer la distance d'un point de mesure (x2) sur la surface supérieure (21) du matériau en film ou en bande (2) passant par ledit espace (5),
lesdits premier et second dispositifs de mesure (41, 41) étant formés d'un seul tenant,
**caractérisé en ce que** l'appareil (1) comprend également
un dispositif (6, 63, 64) d'entraînement d'un écran métallique (7) de l'appareil (1) entre une première position, dans laquelle ledit écran (7) est interposé entre ladite tête de mesure (4) et ledit rouleau (3) et une seconde position, dans laquelle ledit écran (7) n'est pas interposé entre la dite tête de mesure (4) et ledit rouleau (3), et **en ce que** l'appareil (1) comprend également des moyens (81, 82) pour régler la distance entre ledit écran métallique (7) et la dite tête de mesure (4) le long dudit axe de mesure (X) dans lequel ledit écran métallique (7) est constitué du même matériau métallique que ladite surface métallique (31) dudit rouleau (3).

2. Appareil (1) selon la revendication 1, dans lequel des moyens (9, 10) sont mis en oeuvre pour éloigner ladite tête de mesure (4) dudit rouleau (3), pour former de façon réversible un autre espace (51) destiné à recevoir ledit écran métallique (7).

3. Appareil (1) selon la revendication 2, dans laquelle ledit dispositif (6, 63, 64) d'entraînement dudit écran métallique (7) et lesdits moyens (9, 10) pour éloigner de façon réversible ladite tête de mesure (4) dudit rouleau (3) sont actionnés par un moyen d'entraînement commun (10).

4. Appareil selon la revendication 3, dans lequel ledit moyen d'entraînement (10) est un actionneur linéaire (10), et dans lequel ledit dispositif (6, 63, 63) d'entraînement dudit écran métallique (7) comprend un mécanisme bielle-manivelle (63, 64).

5. Appareil (1) selon n'importe laquelle des revendications précédentes, dans lequel lesdits moyens (81, 82) pour régler la distance entre ledit écran métallique (7) et ladite tête de mesure (4) le long dudit axe de mesure (X) agissent sur ladite tête de mesure (4).

6. Appareil (1) selon la revendication 5, dans lequel lesdits moyens (8) pour régler la distance entre ledit écran métallique (7) et ladite tête de mesure (4) comprennent un moteur pas-à-pas (81).

7. Appareil (1) selon la revendication 5 ou 6, dans lequel lesdits moyens (8) pour régler la distance entre ledit écran métallique (7) et ladite tête de mesure (4) comprennent un capteur relatif (81).

8. Appareil (1) selon la revendication 5 ou 6, dans lequel lesdits moyens (8) pour régler la distance entre ledit écran métallique (7) et ladite tête de mesure (4) comprennent un capteur absolu (81).

9. Appareil (1) selon n'importe laquelle des revendications précédentes, dans lequel ledit second dispositif de mesure (42) est un capteur de rétrodiffusion fluidique.

10. Procédé pour l'étalonnage embarqué n ligne d'un appareil (1) pour la mesure sans contact de l'épaisseur d'un matériau en film ou en bande non ferromagnétique et non électroconducteur (2), passant sur un rouleau (3) pourvu d'une surface métallique (31), dans lequel
l'étalonnage en ligne définit un étalonnage ayant lieu lorsque l'installation de fabrication du matériau en film ou en bande est en marche, ledit appareil possédant une tête de mesure (4) comprenant
Un dispositif de mesure inductif (41) et/ou un dispositif de mesure optique ou pneumatique (42), ledit procédé comprenant les étapes consistant à :
- interposer un écran métallique (7), constituée du même matériau que la surface métallique (31) du rouleau (3), entre la tête de mesure (4) et le rouleau (3) ;
- changer la distance entre la dite tête de mesure (4) et ledit écran métallique (7) pas-à-pas, à l'intérieur d'une plage préétablie de distances prédéterminées ;
détecter une valeur, à chaque distance prédéterminée, mesurée par le dispositif de mesure inductif (41) et/ou par le dispositif de mesure optique ou pneumatique (42) ;
- déterminer la courbe d'étalonnage du dispositif de mesure optique ou pneumatique (42) et/ou du dispositif de mesure inductif (41).
